# FASCICULE DE BREVET EUROPEEN

(11) **EP 3 339 010 B1**
(45) Date de publication et mention de la délivrance du brevet: **27.04.2022**
(21) Numéro de dépôt: 17208370.1
(22) Date de dépôt: 19.12.2017
(51) Int. Cl.: B30B 15/06, B29C 43/36, B29C 43/54, B29C 43/58, B29C 70/46, B29K 105/08, B29K 105/06

(54) **PRESSE CHAUFFANTE, ENSEMBLE DE PRESSAGE, PROCÉDÉ DE RÉGLAGE ET UTILISATIONS D'UNE TELLE PRESSE CHAUFFANTE**
HEIZPRESSE, PRESSANORDNUNG, EINSTELLVERFAHREN UND EINSATZBEREICHE EINER SOLCHEN HEIZPRESSE
HOT PRESS, PRESSING ASSEMBLY, ADJUSTMENT PROCEDURE AND USES OF SUCH A HOT PRESS

(30) Priorité: 20.12.2016 FR 1662902
(43) Date de publication de la demande: 27.06.2018
(73) Titulaire: Porcher Industries, 38300 Badinières (FR)
(72) Inventeur: GANDON, Pierre Yves, 38080 L'ISLE D'ABEAU (FR); THIBAUDIER, Benoît, 38000 GRENOBLE (FR); DESPLANQUES, Caroline, 38630 VEYRINS THUELLIN (FR)
(74) Mandataire: Lavoix

(56) Documents cités:
- EP-A1- 0 567 387
- DE-C1- 19 700 371
- JP-A- 2009 178 718
- US-A- 4 557 792
- US-A- 4 598 573
- US-A1- 2010 307 217
- US-A1- 2012 024 456

## Description

La présente invention concerne une presse chauffante, un ensemble de pressage, un procédé de réglage d'une telle presse chauffante et des utilisations d'une telle presse chauffante.

L'invention se rapporte plus particulièrement au domaine des presses planes chauffantes, pour le pressage de pièces planes de superficie relativement élevée. Les pièces planes concernées sont notamment des plaques de matériaux composites comprenant un tissu associé à une matrice, du genre matériau plastique thermodurcissable ou thermoplastique, qui nécessite un chauffage important pour consolider le tissu. Les pièces planes concernées sont destinées notamment à entrer dans la réalisation d'aéronefs. D'autres types de pièces planes, avec d'autres matériaux et pour d'autres destinations, peuvent faire l'objet d'un pressage et d'un chauffage dans ce type de presse.

Compte-tenu de la dimension importante des plateaux de la presse plane, la planéité de la surface pressante de ces plateaux peut être mise à mal à cause des températures et des pressions en jeu dans la presse. Dans le cas particulier d'un matériau composite haute-performance, il est nécessaire d'appliquer des conditions extrêmes de température et de pression sur la pièce à réaliser, afin de garantir une imprégnation à cœur du tissu de renfort, à fibres continues à haut taux volumique, préférentiellement 45 à 60% en volume, par la matrice en polymère, laquelle est très visqueuse. En effet, le renfort fibreux est peu amène à s'ouvrir et à se déformer du fait de la continuité, de la densité et de la résistance des fibres.

Pour une bonne imprégnation, les pressions appliquées par la presse doivent s'élever à au moins 10 bars, voire s'élever à 15 bars. Pour réaliser la matrice, on utilise des polymères de haute-performance, thermoplastiques, tels que polyétherimide (PEI), polymère à cristaux liquides (LCP), polyéthersulfone (PES), polyamide-imide (PAI), polysulfure de phénylène (PPS), polyétheréthercétone (PEEK), polyaryléthercétone (PAEK) ou polyéthercétonecétone (PEKK). Pour la mise en œuvre de ces polymères particuliers, la température doit excéder 220°C, voire 400°C, en fonction du polymère choisi. Ces conditions extrêmes de fonctionnement peuvent entraîner une déformation générale ou localisée de la surface pressante des plateaux sur le long terme, alors que le risque de déformation serait particulièrement moindre pour la fabrication de pièces en matériau composite classique, par exemple avec un renfort fibreux à fibres courtes, ou mettant en œuvre un polymère de performance moindre, tel que Polyoxyméthylène (POM), polyamide (PA), ou polyméthacrylate de méthyle (PMMA).

Si aucune compensation du défaut de planéité n'est prévue, la pièce obtenue est susceptible de présenter des défauts de planéité plus ou moins importants, ou, dans le cas du matériau composite susmentionné, des inclusions de bulles. Or, pour certaines applications, notamment le domaine de l'aéronautique, les exigences de géométrie et d'absence de défaut sont particulièrement élevées. Par exemple, la tolérance d'épaisseur d'une pièce plane de 0,31 mm d'épaisseur peut être limitée à ±0,015 mm (millimètres) et une absence totale de bulles ou autres défauts peut être exigée. Tout défaut des plateaux de presse en cours de pressage peut ainsi empêcher d'obtenir des pièces planes conformes à de telles exigences. Il est alors généralement nécessaire de changer un ou plusieurs éléments constitutifs de la presse afin de rétablir la géométrie initiale des surfaces pressantes endommagées.

Dans un domaine technique éloigné, US 3,685,932 décrit une presse plane chauffante pour panneaux à base de bois, qui est pourvue de poutres de support des plateaux de presse équipés avec un système de chauffage et de refroidissement visant à équilibrer les tensions liées à des déséquilibres thermiques. Cependant, la mise en œuvre d'un tel système nécessite un savoir-faire important et peut s'avérer relativement coûteux à concevoir et à fabriquer. En outre, une telle presse ne comporte pas réellement de moyens de correction d'un défaut localisé sur l'un des plateaux de presse.

Toujours dans un domaine technique éloigné, GB 1 413 320 décrit une presse plane chauffante pour panneaux à base de matériau composite incluant des fibres de verres, un mélaminé et un matériau thermoplastique. La presse est pourvue de deux plateaux de presse, dont l'un est déformable en flexion. Pour cela, le plateau comprend deux couches planes entre lesquelles une couche ondulée est interposée, pour faciliter la déformation en flexion du plateau. Des résistances chauffantes sont prévues entre les ondulations de la couche ondulée. Le plateau déformable est actionné par une pluralité de vérins hydrauliques double-effet pour modifier la planéité ou la courbure du plateau. La mise en œuvre d'un tel système requiert également de nombreux moyens, qui peuvent s'avérer coûteux et complexes à fabriquer et à mettre en œuvre. Cette presse n'est pas non plus pourvue de moyens qui pourraient permettre de corriger un défaut localisé sur l'un des plateaux de presse.

US 4,557,792 A décrit un presse chauffante pour la fabrication de circuits imprimés multicouche, incluant un système de variation d'épaisseur intégré à demeure à la presse. Toutefois, cette presse serait difficilement adaptable pour un pressage sous conditions de température particulièrement élevées.

US 2012/024456 A1 décrit une presse chauffante mise en œuvre pour lier un wafer et son support, incluant des moyens pour modifier la forme de la surface pressante. Toutefois, cette presse connue est conçue à une échelle très réduite et serait difficilement adaptable pour un pressage de grandes pièces sous conditions de température particulièrement élevées.

JP 2009 178718 A décrit une presse pour la production de pièces automobiles volumiques, c'est-à-dire non planes, conformées par moule, la presse comportant des moyens de simulation de défaut d'alignement du moule.

EP 0 567 387 A1 décrit une presse selon le préambule de la revendication 1.

L'invention propose de porter remède aux inconvénients de l'art antérieur susmentionné en proposant une nouvelle presse chauffante de conception particulièrement simple et qui, tout en étant prévue pour la fabrication de pièces planes de superficie importante, à conditions de fonctionnement extrêmes, permet d'obtenir des pièces satisfaisant à des exigences particulièrement élevées de fabrication.

L'invention a pour objet une presse chauffante selon la revendication 1.

Grâce à l'invention, le système de compensation offre la possibilité de compenser tout éventuel défaut de géométrie de la surface pressante. Le caractère amovible de chaque cale amovible permet d'adapter le système de compensation à tout défaut de géométrie relevé sur la surface pressante. Toute exigence de fabrication peut ainsi être remplie, sans nécessiter un remplacement ou une réparation du plateau présentant le défaut de géométrie. De plus, la presse chauffante est relativement peu coûteuse du fait de la simplicité du système de compensation. En effet, il n'est notamment pas nécessaire de prévoir un système complexe de pilotage de la géométrie de la surface pressante par des vérins hydrauliques, ou d'équilibrage de tensions de la presse chauffante liées à un déséquilibre thermique par un système de contrôle du chauffage et du refroidissement.

De préférence, la presse chauffante est particulièrement adaptée pour la réalisation d'une pièce plane en matériau composite, la pièce plane comprenant de préférence au moins une couche de renfort fibreux et une matrice de consolidation de ce renfort fibreux. En effet, les moyens de chauffe de la presse sont conçus pour porter la pièce plane à une température suffisamment élevée notamment pour provoquer le renfort ou la consolidation de tels matériaux composites. Par ailleurs, une fois pressées et chauffées dans la presse de l'invention, chaque pièce plane, si elle est avantageusement constituée d'un tel matériau, doit être d'une superficie suffisante pour pouvoir ensuite servir de matière première pour la réalisation d'une ou plusieurs pièces de formes et de tailles particulières à partir de cette pièce plane. En d'autres termes, la pièce plane formée par la presse de l'invention est avantageusement une pièce non-définitive destinée à subir d'autres transformations.

Selon d'autres caractéristiques optionnelles et avantageuses de l'invention :
- le système de compensation s'étend en regard d'une partie seulement de la superficie de la surface pressante, en étant disposé à l'aplomb d'une zone de défaut de géométrie de la surface pressante.
- le système de compensation comprend au moins une cale amovible centrale et deux cales amovibles latérales disposées de part et d'autre de la cale amovible centrale bord à bord avec cette dernière, la valeur de l'épaisseur de la cale amovible centrale étant supérieure à la valeur de l'épaisseur des cales amovibles latérales.
- chaque cale amovible est formée par une seule feuille métallique, de préférence en acier.
- la presse chauffante comprend au moins une couche d'isolant thermique interposée entre le sommier et le plateau du membre pourvu du système de compensation, le système de compensation étant préférentiellement interposé entre la couche d'isolant thermique et le sommier de ce membre.
- l'actionneur de pressage est conçu pour que l'effort de pressage exercé entraîne une pression sur l'élément à chauffer et à presser, la pression dont la valeur est comprise entre 1 et 15 bars, l'actionneur de pressage comprenant préférentiellement au moins un vérin hydraulique.
- chaque plateau comprend une âme métallique sur laquelle la surface pressante est formée et le moyen de chauffe comprend un système de tubes chauffants qui s'étend au sein de l'âme métallique d'au moins l'un des plateaux.
- le sommier et le plateau de chacun des membres constituent des parties à demeure de la presse chauffante.

L'invention a également pour objet un ensemble de pressage comprenant une presse chauffante conforme à ce qui précède, et l'élément à chauffer et à presser, lequel comprend un moule plan, qui comprend deux empreintes planes rapportées l'une contre l'autre, en ménageant ainsi entre elles un logement d'accueil pour la pièce plane à presser et à chauffer, chaque empreinte plane étant conçue pour être mise en en appui plan contre l'une des surfaces pressantes de la presse chauffante, de façon à transmettre l'effort de pressage et la température du moyen de chauffe à la pièce plane.

L'invention a également pour objet un procédé de réglage selon la revendication 10.

L'invention a également pour objet une utilisation selon la revendication 11.

L'invention a également pour objet une utilisation d'une presse chauffante selon la revendication 12.

Selon une caractéristique optionnelle et avantageuse de l'invention, le matériau composite est un matériau composite haute-performance, dont le renfort fibreux comprend des fils de matériau inorganique, tels que du carbone et/ou du verre, et est continu, et dont la matrice de consolidation comprend un polymère thermoplastique haute-performance, tel que PAEK, PEKK, PEEK, PPS, PAI, PES, PEI, ou LCP, ou leurs copolymères, ou une combinaison de ces polymères thermoplastiques haute-performance et/ou de leurs copolymères.

L'invention sera mieux comprise à la lecture de la description qui va suivre, donnée à titre d'exemple non limitatif et faite en se référant aux dessins dans lesquels :
- Les figures 1 et 2 sont des vues en coupe longitudinale d'une presse chauffante, représentée dans deux configurations différentes, selon un premier mode de réalisation conforme à l'invention ;
- La figure 3 est un détail de réalisation de la figure 1 selon le cercle III ; et
- La figure 4 est une vue similaire à la figure 3 d'un deuxième mode de réalisation conforme à l'invention.

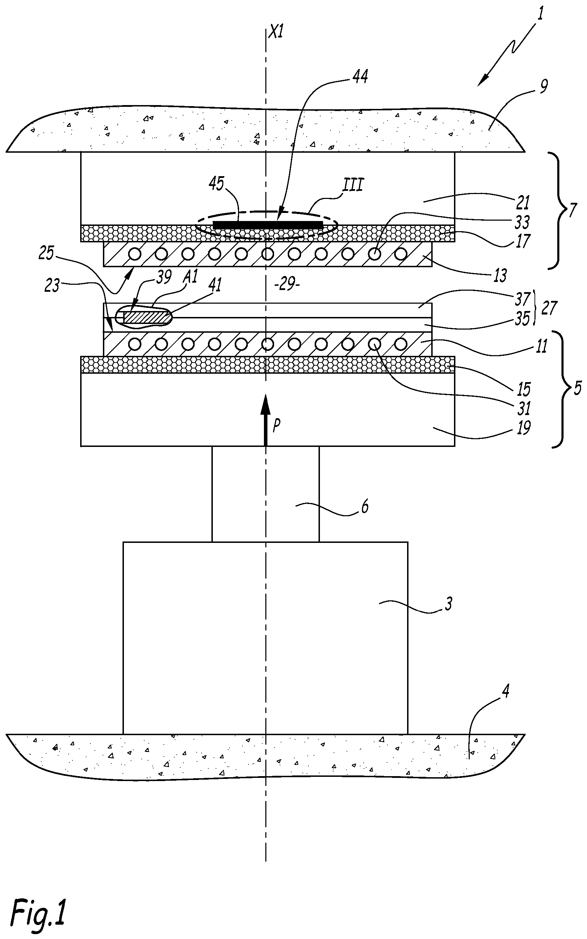

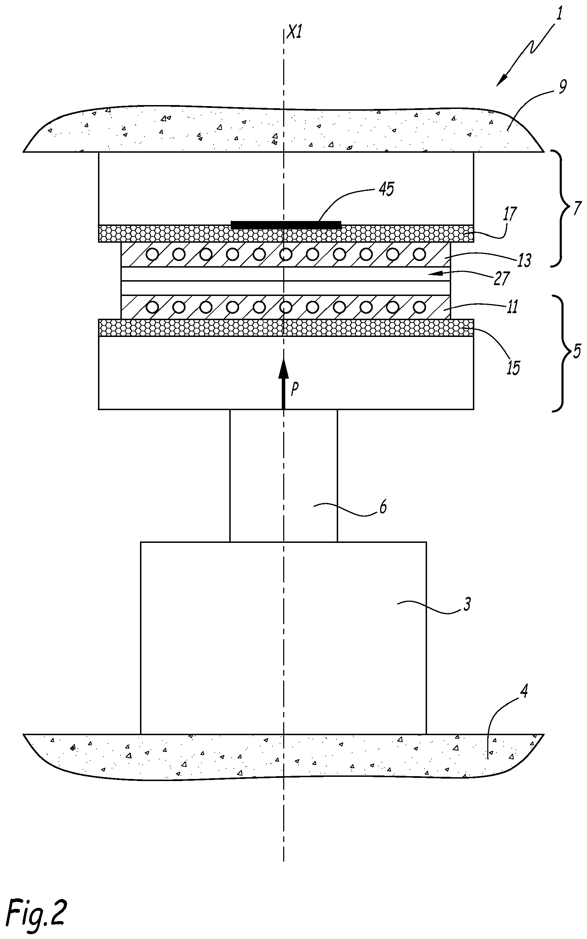

La presse chauffante 1 illustrée aux figures 1 et 2 est une presse plane ou presse à plateaux. La presse 1 comprend un membre fixe 3, représenté non coupé, fixé sur un support horizontal 4, reposant lui-même par exemple sur le sol. La presse 1 s'élève à partir du support 4 selon un axe principal X1, qui est vertical dans le cas d'espèce, ou pour le moins orthogonal au support 4.

Dans le présent document, les termes « plan », « plane », « plat » et « plane » ont la même signification.

La presse chauffante 1 est conçue pour mettre en œuvre une opération de pressage et de chauffage d'un élément 27 à chauffer et à presser. Dans l'exemple illustré aux figures, l'élément 27 comprend un moule plan en deux parties, à savoir deux empreintes planes 35 et 37. Les deux empreintes 35 et 37 évoluent entre une configuration ouverte et une configuration fermée, dans laquelle elles sont rapportée l'une contre l'autre. Les empreintes 35 et 37 sont illustrées en configuration fermées sur la figure 1. Les empreintes 35 et 37 définissent alors entre elles un logement d'accueil 39, représenté au niveau d'un arrachement A1 sur la figure 1, au sein duquel est logée une pièce plane 41 à presser et à chauffer. On peut utiliser un moule en acier, de préférence inoxydable. L'acier doit être résistant aux matériaux moulés. L'épaisseur du moule peut être comprise entre environ 2 et environ 50 mm, notamment entre environ 10 et environ 30 mm, par exemple environ 20 mm.

De préférence, chaque empreinte 35 et 37 présente elle-même une épaisseur comprise entre environ 2 et environ 50 mm, notamment entre environ 10 et environ 30 mm, par exemple environ 20 mm.

Cette épaisseur est suffisamment faible pour permettre à la fois :
- de valablement imprimer ou maintenir une forme plane aux deux faces de la pièce plane 41,
- permettre une transmission efficace de la chaleur fournie par la presse 1 à la pièce plane 41 au travers des empreintes 35 et 37, et
- permettre de facilement transporter l'élément 27 jusqu'à la presse 1, de facilement l'introduire dans cette presse 1, alors même que l'élément a éventuellement déjà été préalablement porté à une température chaude, par exemple supérieure à 220°C, puis de facilement transporter l'élément 27 vers des postes subséquents, une fois pressé et chauffé dans la presse 1, alors que l'élément est encore chaud et de forme non nécessairement figée du fait de sa température élevée.

Par « empreintes planes », on entend de préférence que la forme imprimée sur la pièce 41, plus particulièrement sur ses deux grandes faces opposées, par chacune des empreintes 35 et 37, est plane, c'est-à-dire plate. En particulier, les empreintes 35 et 37 n'impriment pas une forme en relief ou un motif à la pièce 41. Chacune des deux faces de la pièce 41 obtenue, qui a été en contact avec l'une des deux empreintes 35 ou 37, est prévue pour être plate, de préférence parfaitement plate.

Par exemple, chaque empreinte 35 et 37 se présente sous la forme d'une tôle de forme plane et rectangulaire.

De préférence, le logement d'accueil 39 est plan, c'est-à-dire plat.

En variante, on peut prévoir d'utiliser la presse 1 pour presser directement une pièce plane, sans moule plan intermédiaire. La pièce plane est alors en contact direct avec la presse 1, sans empreintes.

De façon préférentielle, on utilise la presse chauffante 1 pour réaliser des pièces 41 destinées à la construction d'un aéronef, du genre avion ou hélicoptère. La pièce plane 41 est préférentiellement destinée à former un élément de structure, d'ossature, d'habillage ou d'isolation de l'aéronef. De façon plus générale, la presse 1 est conçue spécifiquement pour la réalisation de pièces 41 de géométrie particulièrement précise et exemptes de défauts.

En particulier, on utilise la presse chauffante 1 pour réaliser des pièces planes 41 en matériau composite haute-performance. Ce type de matériau composite particulier comprend une ou plusieurs couches d'un renfort fibreux, c'est-à-dire de préférence une structure textile telle qu'un tissu ou un non-tissé, s'étendant parallèlement au plan de la pièce 41, pour former un matelas. Le nombre de couches de renfort fibreux peut être compris entre 1 et 200 en fonction de l'application. Dans le cas d'un matériau composite haute-performance, le renfort fibreux comprend des fils, qui sont avantageusement réalisés en matériau inorganique. On peut prévoir en particulier des fils en carbone ou en verre, ou un mélange des deux. Pour obtenir un matériau composite haute-performance, le renfort fibreux est continu, c'est-à-dire que les fibres sont longues, et avantageusement non coupées ou non discontinues. Pour ce matériau composite particulier, le renfort fibreux peut occuper entre environ 45 et environ 60% en volume de la pièce 41.

On peut utiliser tout type de fil de carbone. De préférence, on utilise des fils Haute Résistance (HR), pour former un composite haute-performance, dont le module en traction est compris entre 220 et 241 GPa et dont la contrainte à la rupture en traction est comprise entre 2450 et 4830 MPa. Alternativement, on peut utiliser des fils de Module Intermédiaire (IM) dont le module en traction est compris entre 242 et 300 GPa et dont la contrainte à la rupture en traction est comprise entre 3450 et 6400 MPa ou des fils Haut Module (HM) dont le module en traction est compris entre 345 et 600 GPa et dont la contrainte à la rupture en traction est comprise entre 3450 et 5520 MPa. Les intervalles ont été revus par rapport à ASM Handbook, ISBN 0-87170-703-9, ASM International 2001, pour tenir compte de l'augmentation de l'offre en matière de fils carbone. On peut également utiliser des fils HR, IM et HM tels que définis ASM Handbook :

| Type de filament | E (GPa) | σ*_{R}* (MPa) |
|---|---|---|
| Haute Résistance (HR) | 220 - 241 | 3450 - 4830 |
| Module Intermédiaire (IM) | 290 - 297 | 3450 - 6200 |
| Haut Module (HM) | 345 - 448 | 3450 - 5520 |

Les fils de carbone sont constitués d'un ensemble de fibres, généralement compris entre 1 000 et 80 000 fibres. Pour l'application ici, on emploie des fils comprenant notamment de 1 000 (1K) à 12 000 (12K) fibres environ, par exemple 3 000 ou 6000 fibres environ (3K).

Le matériau composite haute-performance comprend également une matrice de consolidation de ce renfort fibreux, qui comprend au moins un polymère thermoplastique.

On peut par exemple appliquer le thermoplastique par imprégnation, extrusion, film stacking, poudrage sur le matelas de renfort fibreux préalablement une étape de consolidation.

On utilise la presse chauffante 1 pour que se produise la consolidation du renfort fibreux par imprégnation de ce dernier à cœur par la matrice de consolidation, sous l'effet d'un apport de chaleur suffisant et d'une pression suffisante apportée par la presse 1. En particulier, le pressage et le chauffage chassent au moins une partie de l'air imprégnant le tissu pour le remplacer par le matériau formant la matrice de consolidation. La pression apportée par la presse 1 sur le matériau à presser peut être comprise entre environ 1 et environ 15 bars, pour produire une imprégnation satisfaisante, et ainsi conférer un caractère « haute-performance » au matériau pressé. Dans le cas particulier d'un matériau composite haute-performance, la matrice de consolidation comprend un polymère thermoplastique haute-performance, du genre polyétheréthercétone (PEEK) ou polysulfure de phénylène (PPS), ou un mélange de plusieurs polymères thermoplastiques haute-performance. D'autres polymères haute-performances peuvent être utilisés, tels que le PEKK, le PAI, le PES, le PEI, et le LCP. Ce type de polymère haute-performance nécessite donc d'être porté à une température particulièrement élevée, à savoir au moins 220°C, voire 400°C (degrés Celsius) en fonction du polymère choisi, pour que l'imprégnation soit effective. Pour les matériaux haute-performance, la température de fonctionnement de la presse 1 est comprise entre environ 300°C et environ 450°C. En effet, cette température doit être supérieure à une température de fusion et/ou à une température de transformation du matériau de la matrice de consolidation. En particulier certains de ces polymères nécessitent un chauffage à environ 300°C, voire 310°C, tels que le PPS, alors que d'autres nécessitent un chauffage entre environ 380°C et 400°C, tels que le PEEK. Outre les différents polymères susmentionnés, le matériau composite haute-performance peut comprendre leurs copolymères. Alternativement, le matériau composite peut comprendre un mélange des polymères susmentionnés, et/ou de leurs copolymères.

Le temps de passage dans la presse 1 peut être compris entre environ 10 minutes et environ 1 heure, de préférence entre environ 15 et environ 45 minutes, plus préférentiellement entre environ 15 et environ 35 minutes, typiquement entre environ 15 et environ 25 minutes.

La température de fonctionnement de la presse ainsi que sa pression de fonctionnement doivent être adaptés pour cette application particulière.

Le matériau thermoplastique représente préférentiellement environ 30 à environ 60 % du poids de la pièce plane fabriquée.

Cela n'exclut pas la fabrication de pièces 41 pour d'autres applications et avec d'autres matériaux à l'aide de la presse 1. Ces matériaux peuvent être par exemple un matériau composite qui n'est pas spécifiquement haute-performance, comprenant un renfort fibreux et une matrice de consolidation.

Les conditions de temps, de pressions et de températures mises en œuvre dans la presse 1 et mentionnées ci-dessus sont avantageusement propres à la mise en œuvre, de matériaux composites et, le cas échéant, haute-performance, comprenant notamment une étape d'imprégnation, de consolidation et/ou de formage. La mise en œuvre de ces matériaux particuliers constitue un cas particulier à distinguer de la mise en œuvre matériaux plus classiques, tels que les métaux ou les matières plastiques sans renfort, qui ne nécessitent notamment pas d'étape d'imprégnation ou de consolidation, et pour lesquels un simple formage par moulage ou emboutissage peut s'avérer suffisant.

Pour fabriquer une pièce plane à l'aide de la presse 1, on met préférentiellement en œuvre les étapes suivantes :
- formation du matelas comprenant au moins une couche de renfort fibreux, sur lequel on dépose un matériau thermoplastique destiné à former la matrice de consolidation,
- introduction dudit matelas dans le moule, le matelas étant placé entre les deux empreintes 35 et 37 de ce moule,
- consolidation du matelas par passage du moule contenant le matelas dans la presse 1, dont la température est supérieure au point de fusion et/ou de transformation du matériau thermoplastique, et dont la pression est suffisamment élevée pour permettre une imprégnation à cœur du renfort fibreux par le matériau thermoplastique formant la matrice de consolidation, puis refroidissement dans la même presse ou dans une autre presse dite « presse froide », la presse froide étant avantageusement une presse plane chauffant à une température inférieure à celle de la presse 1, par exemple environ 80°C,
- démoulage et obtention d'une pièce plane (41) formée par une plaque consolidée en composite de matériau textile.

On nomme « ensemble de pressage » la presse 1 et le moule plan qui lui est associé.

La presse 1 comprend également, dans l'ordre le long de l'axe X1, le membre 3, un actionneur de pressage 6, représenté non coupé, un membre mobile 5, un membre fixe 7 et une structure de support 9. L'actionneur de pressage 6 est interposé entre le membre 3 et le membre mobile 5 pour mouvoir le membre mobile 5 le long de l'axe principal X1 par rapport au membre 3.

L'actionneur de pressage est conçu pour appliquer un effort de pressage P, en direction du membre fixe 7 parallèlement à l'axe X1. Cet effort de pressage P conduit à appliquer une pression sur l'élément 27 dont la valeur est comprise entre 1 et 15 bars, ce qui correspond, pour un élément à presser de 1m², entre 10 et 150 T (Tonnes).

L'actionneur de pressage 6 comprend préférentiellement un ou plusieurs vérins hydrauliques, qui permettent un pilotage particulièrement précis et l'application d'un effort P dans la plage susmentionnée. L'actionneur 6 peut toutefois comprendre tout moyen équivalent pour exercer l'effort P susmentionné.

Le membre 5 comprend, superposés à partir de l'actionneur 6, en direction du membre 7 le long de l'axe X1, un sommier 19, représenté non coupé, une couche d'isolant 15 et un plateau 11.

De même, le membre 7 comprend, superposés le long de l'axe X1, un plateau 13 faisant face au plateau 11, une couche d'isolant 17 et un sommier 21, représenté non coupé. Les membres 5 et 7 ont donc leurs éléments disposés en miroir par rapport à un plan orthogonal à l'axe X1.

Le sommier ou contrefort 19 est une base structurelle, par exemple métallique, par l'intermédiaire de laquelle l'actionneur exerce l'effort P sur le membre 5. Le sommier ou contrefort 21 est également une base structurelle, par exemple métallique, qui est fixée à la structure de support 9 disposée au sommet de la presse 1 le long de l'axe X1. La structure 9 est elle-même solidaire du support 4, de sorte que le membre 7 est fixe par rapport au support 4. Le membre 7, et en particulier le sommier 21, reprend l'effort P exercé par l'actionneur 6 par l'intermédiaire du membre 5, dans la mesure où le membre 7 est arrêté le long de l'axe X1 par la structure 9. En définitive, le membre 3, le support 4, la structure 9 et le sommier 21 constituent avantageusement un ensemble unitaire, formant le bâti de la presse 1.

En variante, on prévoit que le membre 7 est mobile par rapport au support 4, sous l'action d'un actionneur, par exemple similaire à l'actionneur 6. En tout état de cause, les membres 5 et 7 sont mobiles l'un par rapport à l'autre le long de l'axe X1, au moins l'un des membres 5 et 7, sinon les deux, étant mobile par rapport au membre 3.

Les couches d'isolant thermique 15 et 17 sont solidaires respectivement des sommiers 19 et 21. Les couches 15 et 17 sont conçues pour isoler thermiquement les sommiers 19 et 21 des plateaux 11 et 13. Pour cela, les couches 15 et 17 comprennent par exemple du mica, ou tout autre matériau thermiquement isolant adapté. En variante, chaque couche d'isolant thermique 15 et 17 est composée de plusieurs couches superposées de matériaux différents.

Les plateaux 11 et 13 sont solidaires respectivement des couches 15 et 17 et sont disposés en regard l'un de l'autre. Les plateaux 11 et 13 s'étendent dans des plans orthogonaux à l'axe X1, tout comme les couches d'isolant thermique 15 et 17. Le plateau 11 présente une surface pressante 23 et le plateau 13 une surface pressante 25. Les surfaces 23 et 25 sont des surfaces libres, opposées à la couche d'isolant 15 ou 17. De préférence, chaque surface 23 et 25 est conçue pour être plane en cours de pressage et orthogonale à l'axe X1. Les surfaces 23 et 25 sont également conçues pour être parallèles entre elles. Néanmoins, du fait des tensions causées par les conditions sévères de température et de pression en jeu dans la presse 1, les surfaces pressantes 23 et 25 sont susceptibles de ne pas être parfaitement planes ou parallèles en pratique. Chaque plateau 11 et 13 comprend une âme métallique, par exemple en acier ou en fonte, sur laquelle la surface 23 ou 25 concernée est formée.

En variante, les surfaces pressantes 23 et 25 sont prévues pour présenter au repos, c'est-à-dire hors pressage et hors chauffage, une légère courbure, par exemple une légère convexité, pour améliorer la planéité du pressage et provoquer une évacuation de l'air contenu dans la pièce 41.

De manière générale, les surfaces pressantes 23 et 25 présentent une forme adaptée à un pressage, associé à un chauffage, d'une pièce plane 41.

Les surfaces 23 et 25 délimitent entre elles un espace d'accueil 29 pour l'élément à presser 27, qui peut être ainsi introduit dans cet espace d'accueil 29 en vue d'être pressé entre les deux plateaux 11 et 13 sous l'action de l'effort de pressage P. En effet, les surface 23 et 25, opposées respectivement aux sommiers 19 et 21, peuvent être écartées ou approchées l'une de l'autre sous l'action de l'actionneur 6. Sur la figure 1, les membres 5 et 7 de la presse 1 sont représentés dans une configuration écartée ou ouverte permettant d'introduire ou retirer l'élément 27. Sur la figure 2, les membres 5 et 7 sont au contraire en configuration rapprochée ou de pressage, dans laquelle l'effort P exercée par l'actionneur 6 est transmise à l'élément 27 par les surfaces 23 et 25, afin de compresser l'élément 27 selon l'axe X1. En effet, chaque plateau 11 et 13 est en appui, le long de l'axe X1, contre le sommier 19 ou 21 de son membre 5 ou 7, par l'intermédiaire de la couche 15 ou 17 du membre 5 ou 7 concerné.

L'élément à presser 27 peut être déposé sur le plateau 11, l'empreinte 35 étant alors en appui plan sur la surface 23, comme illustré sur la figure 1. Lorsque les membres 5 et 7 sont en configuration de pressage, comme illustré sur la figure 2, l'empreinte 37 entre alors en appui plan contre la surface 25, de sorte que les empreintes 35 et 37 sont compressées entre les plateaux 11 et 13 sous l'action de l'actionneur 6. Les empreintes 35 et 37 communiquent alors l'effort de pressage P à la pièce plane 41, qui est elle-même compressée ou aplatie. De préférence, on cherche que l'effort de pressage P soit réparti de façon la plus uniforme possible sur la superficie de la pièce plane 41. On peut également chercher à fournir une pression plus importante dans une partie centrale de la pièce plane 41 afin d'éviter la formation de bulles en son sein.

Les surfaces pressantes 23 et 25 sont par exemple de forme rectangulaire ou carrée. Ces surfaces 23 et 25 définissent une aire d'au moins 1 m². Il est envisageable que les surfaces 23 et 25 définissent une aire supérieure à 2 m² en fonction de l'application souhaitée, par exemple 2,04 m². Ainsi, le volume de l'espace d'accueil 29 est suffisant pour accueillir l'élément à presser 27. De manière générale, la presse 1 est conçue pour le pressage d'éléments à presser 27 de superficie relativement importante, de superficie sensiblement équivalente ou légèrement inférieure à celle des surfaces 23 et 25. Il est donc possible de réaliser des pièces planes 41 de superficie importante grâce à la presse 1.

Chaque plateau 11 et 13 comprend un système tubes ou serpentins chauffants 31 et 33 respectivement, qui constituent un moyen de chauffe des surfaces pressantes 23 et 25. Ces tubes ou serpentins 31 et 33 sont disposés sous la forme d'un réseau réparti dans l'âme des plateaux 11 et 13 afin de fournir une chaleur répartie le plus uniformément possible sur toute la superficie des surfaces 23 et 25. De manière plus générale, le moyen de chauffe de la presse 1 est conçu pour générer de la chaleur visant à porter les plateaux 11 et 13 à une température prédéterminée et contrôlée, cette chaleur étant communiquée à l'élément 27 lors du pressage, par contact de l'élément 27 avec les surfaces 23 et 25. Plus précisément, la chaleur est transmise aux empreintes planes 35 et 37 du moule, qui transmettent cette chaleur à la pièce plane 41 que le moule renferme. Les tubes ou serpentins 31 et 33 sont par exemple des thermocouples, des résistances chauffantes, et/ou des conduites de fluide caloporteur, qui sont conçus pour porter les surfaces 23 et 25 à la température définie ci-avant pour permettre l'imprégnation et la consolidation, en fonction de l'élément à presser 27, et notamment de la nature de des matériaux de la pièce plane 41.

En variante, un seul des membres 5 et 7 est équipé d'un tel moyen de chauffe.

La presse 1 comprend au moins un système de compensation 44 interposé entre la couche d'isolant thermique 17 et le sommier 21, pour compenser un ou plusieurs défauts de géométrie de la surface pressante 25. Le système 44 forme une surépaisseur qui déforme le plateau 13 afin de corriger le défaut de géométrie incriminé de la surface 25. Le système 44 est représenté de façon exagérément épaissie sur les figures 1 à 3, afin de le rendre visible.

Par défaut de géométrie, on entend un défaut de forme, par exemple de planéité, de la surface pressante 25, qui s'étend préférentiellement sur une portion seulement de la superficie de la surface pressante 25. On dispose alors le système 44 en regard d'une partie seulement de la superficie de la surface pressante 25, en étant disposé à l'aplomb de la zone de défaut de géométrie, c'est-à-dire sous le défaut de géométrie, en projection orthogonale par rapport au plan d'extension du plateau 13. Dans l'exemple des figures 1 et 2, le défaut de géométrie est localisé au centre de la surface 25.

Une pluralité de systèmes de compensation, similaires au système 44, peuvent être mis en œuvre simultanément pour un même membre, en étant répartis sous la superficie du plateau 13, afin de corriger autant de défauts de géométrie. Chaque système de compensation est alors disposé à l'aplomb de l'un des défauts de géométrie.

Le défaut de géométrie peut également s'étendre sur toute la superficie de la surface pressante 25. Le système 44 est alors adapté en conséquence et est plus étendu, tout en étant disposé à l'aplomb de toute ou partie de la superficie de la surface 25 et centré au centre du défaut de géométrie.

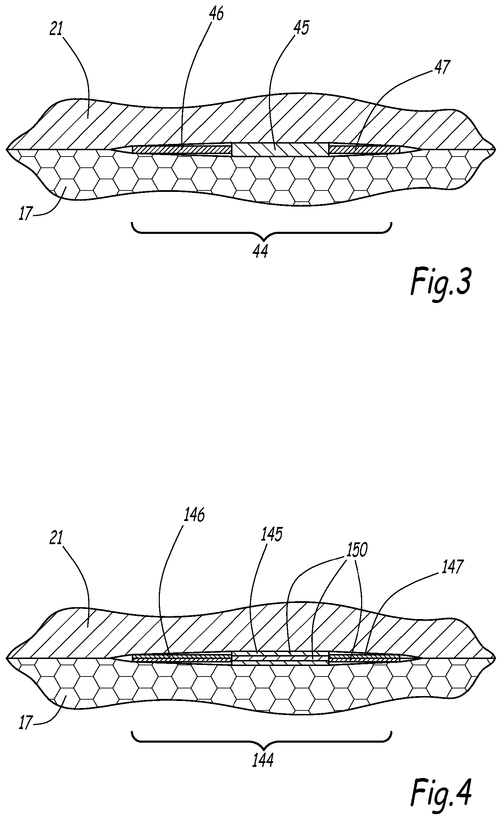

Le système 44 comprend plusieurs cales amovibles 45, 46 et 47, représentées sur la figure 3. Les cales amovibles 45, 46 et 47 sont placées à l'aplomb du défaut de géométrie. Chaque cale amovible 45, 46 et 47 comprend au moins une feuille, et présente une face disposée contre le sommier 21 et une autre face est disposée contre la couche d'isolant 17. De préférence, chaque cale 45, 46 et 47 est une feuille métallique, par exemple en acier, de forme générale rectangulaire ou trapézoïdale, parfois dénommée feuillard. Chaque cale 45, 46 et 47 présente une épaisseur prédéterminée, comprise de préférence entre 0,1 mm et 0,4 mm.

Au cours de la vie de la presse chauffante 1, on peut modifier le système de compensation en retirant ou en ajoutant une ou plusieurs cales amovibles, en fonction de l'évolution des défauts de géométrie.

Dans le mode de réalisation de la figures 3, le système 44 comprend une cale amovible centrale 45 et deux cales amovibles latérales 46 et 47, disposées de part et d'autre de la cale amovible centrale 45, bord à bord avec cette dernière. La valeur de l'épaisseur de la cale amovible centrale 45 étant supérieure à la valeur de l'épaisseur des cales amovibles latérales 46 et 47, de sorte que la déformation du plateau 13 est douce progressive, afin d'éviter un marquage de la couche d'isolant 17 et/ou du plateau 13 par le système 44 et la génération de défauts supplémentaires. Chaque cale 45, 46 et 47 prend appui contre le sommier pour imposer une déformation de la surface 25 en direction du membre 5. En d'autres termes, chaque cale 45, 46 et 47 pousse la surface 25 vers le bas des figures 1, 2 et 3.

Dans un autre mode de réalisation représenté sur la figure 4, on met en place un système de compensation 144 qui se différencie du système 44 en ce que chaque cale 145, 146 et 147 est formée par un empilement de plusieurs feuilles 150, afin d'adapter la surépaisseur de compensation à l'importance du défaut de géométrie. Ces feuilles peuvent être de même épaisseur, ou d'épaisseurs différentes.

En variante, on peut prévoir à la fois des cales obtenues par empilement de feuilles ou ne comprenant qu'une seule feuille.

En variante, le système de compensation peut comprendre davantage de cales amovibles. On répartit avantageusement les cales amovibles les plus épaisses au centre du système de compensation et les cales amovibles les plus fines au niveau des bords. A minima, le système de compensation comprend une seule cale amovible, éventuellement formée par un empilement de feuilles.

En variante, la presse chauffante 1 est dénuée de couches d'isolant, ou seul l'un des deux membres est pourvu d'une couche d'isolant. De préférence, au moins le membre pourvu du système de compensation comprend une couche d'isolant.

En variante également, le système de compensation est interposé entre la couche d'isolant et le plateau de l'un des membres. Alternativement, le système de compensation est interposé entre deux couches prévues entre le sommier et le plateau. De manière générale, on interpose le système de compensation entre le plateau et le sommier d'un même membre de la presse.

Il est préférable que le système de compensation soit interposé entre des parties de la presse qui sont à demeure, telles que le plateau et le sommier, de sorte que le système de compensation reste en place pour le pressage et le chauffage d'une pluralité d'éléments à chauffer et presser, successivement introduits et retirés de la presse. Par « parties à demeure », on entend des parties de la presse qui ont vocation à rester équipées sur la presse pour le pressage et le chauffage de plusieurs éléments successifs, par exemple contrairement aux empreintes planes du moule, qui ne sont pas des parties à demeure, puisque, appartenant à l'élément à chauffer et à presser, les empreintes planes du moule sont introduites dans la presse pour le pressage et le chauffage, puis retirées une fois ces opérations effectuées.

Par ailleurs, il est préférable que le système de compensation ne soit pas directement au contact du moule, notamment dans la mesure où ce moule présente une épaisseur relativement faible, par exemple moins de 50 mm ou moins de 20 mm, ce qui permet une meilleure répartition de la compensation d'épaisseur appliquée.

Pour régler la presse 1, et en particulier pour déterminer à quel lieu placer le système de compensation et sous quelle forme, on met en œuvre le procédé qui suit. Dans un premier temps, on introduit un système témoin, non illustré, dans l'espace d'accueil 29. Le système témoin est un objet déformable, qui témoigne ainsi de la géométrie des plateaux lorsqu'il est pressé dans la presse 1. En pratique, le système témoin est avantageusement formé par une pluralité d'éléments déformables, ou imprimables, tels que des baguettes en aluminium, initialement de même épaisseur, que l'on répartit sur la superficie de la surface pressante 23. Alternativement, la pluralité d'éléments déformables est disposée entre les empreintes 35 et 37, elles-mêmes disposées dans l'espace d'accueil 29. On presse donc le système témoin à l'aide de la presse 1, par action de l'actionneur 6, afin d'imprimer la géométrie des surfaces pressantes 23 et 25 à ce système témoin.

Par « imprimer », on entend avantageusement que le système témoin est déformé de façon plastique ou permanente, c'est-à-dire définitive, par la presse 1.

Une fois le système témoin imprimé, on effectue des mesures pour obtenir des données concernant la géométrie des surfaces pressantes 23 et 25, et ainsi identifier, quantifier et mesure tout éventuel défaut de géométrie.

Ces mesures dimensionnelles du système témoin sont avantageusement effectuées alors que le système témoin a été retiré de la presse, ce qui est possible dans la mesure où la géométrie des surfaces pressantes 23 et 25 est imprimée sur le système témoin de façon définitive par la presse 1.

En fonction de ces données collectées, en particulier de celles qui concernent des défauts de géométrie, on modifie le système de compensation, c'est-à-dire que l'on ajoute ou on retire des cales amovibles, afin d'imposer une déformation qui corrige les défauts identifiés. Si aucun défaut n'existe, ou si la compensation est trop forte, on peut retirer des cales amovibles, ou même la totalité du système de compensation, de la presse 1.

Les caractéristiques des différents modes de réalisations et variantes exposés ci-dessus peuvent être mises en œuvre dans chaque mode de réalisation et variante, pour autant que techniquement possible.

## Revendications

1. Presse chauffante (1) pour la réalisation d'une pièce plane (41), la pièce plane étant de préférence en matériau composite et comprenant de préférence au moins une couche de renfort fibreux et une matrice de consolidation de ce renfort fibreux, la presse chauffante (1) comprenant :
- deux membres (5, 7), chaque membre comprenant un plateau (11, 13), les plateaux présentant tous deux une surface pressante (23, 25), lesquelles se font face, sont sensiblement parallèles et définissent chacune une superficie d'au moins 1 m², les surfaces pressantes délimitant ainsi entre elles un espace d'accueil (29) d'un élément (27) à chauffer et à presser, chaque membre comprenant un sommier (19, 21) opposé à la surface pressante, le plateau de chaque membre étant en appui contre le sommier de ce membre,
- un actionneur de pressage (6), configuré pour exercer un effort de pressage (P) sur au moins l'un des deux membres (5), par l'intermédiaire du sommier (19) de ce membre, en direction de l'autre membre (7), et
- un moyen de chauffe (31, 33) d'au moins l'une des surfaces pressantes à une température comprise entre environ 300 et 450°C,
**caractérisée en ce que** la presse chauffante (1) comprend en outre un système de compensation (44; 144), comprenant au moins une cale amovible (45, 46, 47 ; 145, 146, 147) interposée entre le sommier (21) et le plateau (13) d'au moins l'un des deux membres (7), la cale amovible étant ainsi en en appui contre le sommier de ce membre (7) pour imposer une déformation de la surface pressante (25) de ce membre (7), en direction de l'autre membre (5).

2. Presse chauffante (1) selon la revendication 1, **caractérisée en ce que** le système de compensation (44; 144) s'étend en regard d'une partie seulement de la superficie de la surface pressante (25), en étant disposé à l'aplomb d'une zone de défaut de géométrie de la surface pressante.

3. Presse chauffante (1) selon l'une quelconque des revendications précédentes, **caractérisée en ce que** le système de compensation (44; 144) comprend au moins une cale amovible centrale (45 ; 145) et deux cales amovibles latérales (46, 47 ; 146, 147) disposées de part et d'autre de la cale amovible centrale bord à bord avec cette dernière, la valeur de l'épaisseur de la cale amovible centrale étant supérieure à la valeur de l'épaisseur des cales amovibles latérales.

4. Presse chauffante (1) selon l'une quelconque des revendications précédentes, **caractérisée en ce que** chaque cale amovible (45, 46, 47) est formée par une seule feuille métallique, de préférence en acier.

5. Presse chauffante (1) selon l'une quelconque des revendications précédentes, **caractérisée en ce que** la presse chauffante comprend au moins une couche d'isolant thermique (17) interposée entre le sommier (21) et le plateau (13) du membre (7) pourvu du système de compensation (44; 144), le système de compensation étant préférentiellement interposé entre la couche d'isolant thermique et le sommier de ce membre.

6. Presse chauffante (1) selon l'une quelconque des revendications précédentes, **caractérisée en ce que** l'actionneur de pressage (6) est conçu pour que l'effort de pressage (P) exercé entraîne une pression sur l'élément à chauffer et à presser, la pression dont la valeur est comprise entre 1 et 15 bars, l'actionneur de pressage comprenant préférentiellement au moins un vérin hydraulique.

7. Presse chauffante (1) selon l'une quelconque des revendications précédentes, **caractérisée en ce que** :
- chaque plateau (11, 13) comprend une âme métallique sur laquelle la surface pressante (23, 25) est formée, et
- le moyen de chauffe (31, 33) comprend un système de tubes chauffants qui s'étend au sein de l'âme métallique d'au moins l'un des plateaux.

8. Presse chauffante (1) selon l'une quelconque des revendications précédentes, **caractérisé en ce que** le sommier (21) et le plateau (13) de chacun des membres (7) constituent des parties à demeure de la presse chauffante (1).

9. Ensemble de pressage comprenant :
- une presse chauffante (1) conforme à l'une quelconque des revendications précédentes, et
- l'élément (27) à chauffer et à presser, lequel comprend un moule plan, qui comprend deux empreintes planes (35, 37) rapportées l'une contre l'autre, en ménageant ainsi entre elles un logement d'accueil (39) pour la pièce plane (41) à presser et à chauffer, chaque empreinte plane étant conçue pour être mise en en appui plan contre l'une des surfaces pressantes (23, 25) de la presse chauffante, de façon à transmettre l'effort de pressage (P) et la température du moyen de chauffe (31, 33) à la pièce plane.

10. Procédé de réglage d'une presse chauffante (1) conforme à l'une quelconque des revendications 1 à 8, **caractérisé en ce que** le procédé comporte les étapes successives suivantes :
- introduction d'un système témoin dans l'espace d'accueil (29) de la presse chauffante (1),
- pressage du système témoin introduit dans l'espace d'accueil, à l'aide de la presse chauffante, afin d'imprimer au système témoin la géométrie des surfaces pressantes (23, 25) de façon définitive,
- collectes de données concernant la géométrie des surfaces pressante par prise de mesures dimensionnelles du système témoin ainsi imprimé, alors que le système témoin a été retiré de la presse, et
- modification du système de compensation (44; 144) en fonction des données collectées.

11. Utilisation d'une presse chauffante (1) conforme à l'une quelconque des revendications 1 à 8 pour réaliser une pièce plane (41) adaptée pour former une pièce de structure ou d'habillage d'un aéronef.

12. Utilisation d'une presse chauffante (1) conforme à l'une quelconque des revendications 1 à 8 pour réaliser une pièce plane (41) en matériau composite, le matériau composite comprenant au moins une couche de renfort fibreux et une matrice de consolidation du renfort fibreux.

13. Utilisation selon la revendication 12, **caractérisée en ce que** le matériau composite est un matériau composite haute-performance, dont le renfort fibreux comprend des fils de matériau inorganique, tels que du carbone et/ou du verre, et est continu, et dont la matrice de consolidation comprend un polymère thermoplastique haute-performance, tel que PAEK, PEKK, PEEK, PPS, PAI, PES, PEI, ou LCP, ou leurs copolymères, ou une combinaison de ces polymères thermoplastiques haute-performance et/ou de leurs copolymères.

## Patentansprüche

1. Heizpresse (1) zur Herstellung eines flachen Teils (41), wobei das flache Teil vorzugsweise aus einem Verbundmaterial besteht und vorzugsweise mindestens eine Schicht aus einer Faserverstärkung und eine Matrix zur Verfestigung dieser Faserverstärkung umfasst, die Heizpresse (1) umfassend:
- zwei Glieder (5, 7), jedes Glied umfassend eine Platte (11, 13), wobei die Platten beide eine Druckfläche (23, 25) aufweisen, die einander gegenüberliegen, im Wesentlichen parallel sind und jeweils eine Fläche von mindestens 1 m² definieren, wobei die Druckflächen untereinander einen Aufnahmeraum (29) für ein zu erwärmendes und zu pressendes Element (27) begrenzen, wobei jedes Glied eine der Druckfläche gegenüberliegende Unterlage (19, 21) umfasst, wobei die Platte jedes Glieds an der Unterlage dieses Glieds anliegt,
- einen Pressbetätiger (6), der konfiguriert ist, um eine Presskraft (P) auf mindestens eines der zwei Glieder (5) über den Tragbalken (19) dieses Glieds in Richtung des anderen Glieds (7) auszuüben, und
- eine Heizeinrichtung (31, 33) mindestens einer der Druckflächen auf eine Temperatur zwischen etwa 300 und 450 °C,
**dadurch gekennzeichnet, dass** die Heizpresse (1) ferner ein Ausgleichssystem (44; 144) umfasst, umfassend mindestens einen abnehmbaren Keil (45, 46, 47; 145, 146, 147), der zwischen dem Tragbalken (21) und der Platte (13) von mindestens einem der beiden Glieder (7) angeordnet ist, wobei der abnehmbare Keil gegen den Tragbalken dieses Glieds (7) anliegt, um eine Verformung der Druckfläche (25) dieses Glieds (7) in Richtung des anderen Glieds (5) zu erzwingen.

2. Heizpresse (1) nach Anspruch 1, **dadurch gekennzeichnet, dass** sich das Ausgleichssystem (44; 144) gegenüber nur einem Teil der Oberfläche der Druckfläche (25) erstreckt, indem es senkrecht zu einer Zone mit Geometriefehlern der Druckfläche angeordnet ist.

3. Heizpresse (1) nach einem der vorherigen Ansprüche, **dadurch gekennzeichnet, dass** das Ausgleichssystem (44; 144) mindestens einen mittleren abnehmbaren Keil (45; 145) und zwei seitliche abnehmbare Keile (46, 47; 146, 147) umfasst, die auf beiden Seiten des mittleren abnehmbaren Keils Kante an Kante damit angeordnet sind, wobei der Wert der Stärke des mittleren abnehmbaren Keils größer ist als der Wert der Stärke der seitlichen abnehmbaren Keile.

4. Heizpresse (1) nach einem der vorherigen Ansprüche, **dadurch gekennzeichnet, dass** jeder abnehmbare Keil (45, 46, 47) aus einem einzigen Metallblech, vorzugsweise aus Stahl, gebildet ist.

5. Heizpresse (1) nach einem der vorherigen Ansprüche, **dadurch gekennzeichnet, dass** die Heizpresse mindestens eine wärmeisolierende Schicht (17) umfasst, die zwischen der Unterlage (21) und der Platte (13) des mit dem Kompensationssystem (44; 144) versehenen Glieds (7) angeordnet ist, wobei das Ausgleichssystem vorzugsweise zwischen der wärmeisolierenden Schicht und der Unterlage dieses Glieds angeordnet ist.

6. Heizpresse (1) nach einem der vorherigen Ansprüche, **dadurch gekennzeichnet, dass** der Pressbetätiger (6) ausgelegt ist, damit die ausgeübte Presskraft (P) einen Druck auf das zu erhitzende und zu pressende Element bewirkt, wobei der Druck, dessen Wert zwischen 1 und 15 bar liegt, wobei der Pressbetätiger vorzugsweise mindestens einen Hydraulikzylinder umfasst.

7. Heizpresse (1) nach einem der vorherigen Ansprüche, **dadurch gekennzeichnet, dass**:
- jede Platte (11, 13) einen Metallkern umfasst, auf dem die Druckfläche (23, 25) gebildet ist, und
- das Heizmittel (31, 33) ein System von Heizrohren umfasst, das sich innerhalb des Metallkerns von mindestens einer der Platten erstreckt.

8. Heizpresse (1) nach einem der vorherigen Ansprüche, **dadurch gekennzeichnet, dass** die Unterlage (21) und die Platte (13) von jedem Glied (7) feststehende Teile der Heizpresse (1) bilden.

9. Presseinheit, umfassend:
- eine Heizpresse (1) nach einem der vorherigen Ansprüche, **dadurch gekennzeichnet, dass**:
- das zu erhitzende und zu pressende Element (27), das eine ebene Form umfasst, die zwei ebene Vertiefungen (35, 37) umfasst, die aneinander angesetzt sind, wodurch dazwischen ein Aufnahmesitz (39) für das ebene, zu pressende und zu erhitzende Teil (41) ausgespart ist, wobei jede ebene Vertiefung ausgelegt ist, um in ebene Anlage gegen eine der Druckflächen (23, 25) der Heizpresse gebracht zu werden, um die Presskraft (P) und die Temperatur der Heizeinrichtung (31, 33) auf das ebene Werkstück zu übertragen.

10. Verfahren zum Einstellen einer Heizpresse (1) nach einem der Ansprüche 1 bis 8, **dadurch gekennzeichnet, dass** das Verfahren die folgenden aufeinanderfolgenden Schritte umfasst:
- Einführen eines Kontrollsystems in den Aufnahmeraum (29) der Heizpresse (1),
- Pressen des in den Aufnahmeraum eingeführten Kontrollsystems mittels der Heizpresse, um dem Kontrollsystem die Geometrie der Druckflächen (23, 25) endgültig vorzugeben,
- Erheben von Daten bezüglich der Geometrie der Druckflächen durch dimensionale Messungen des so vorgegebenen Kontrollsystems, nachdem das Kontrollsystem aus der Presse entfernt wurde, und
- Änderung des Ausgleichssystems (44; 144) abhängig von den gesammelten Daten.

11. Verwendung einer Heizpresse (1) nach einem der Ansprüche 1 bis 8 zum Herstellen eines flachen Teils (41), das zum Bilden eines Struktur- oder Verkleidungsteils eines Luftfahrzeugs geeignet ist.

12. Verwendung einer Heizpresse (1) 2. nach einem der Ansprüche 1 bis 8 zum Herstellen eines flachen Teils (41) aus Verbundmaterial, das Verbundmaterial umfassend mindestens eine Schicht aus einer Faserverstärkung und eine Matrix zum Verfestigen der Faserverstärkung.

13. Verwendung nach Anspruch 12, **dadurch gekennzeichnet, dass** das Verbundmaterial ein Hochleistungs-Verbundmaterial ist, dessen Faserverstärkung Fäden aus anorganischem Material, wie z. B. Kohlenstoff und/oder Glas, umfasst und kontinuierlich ist, und dessen Verfestigungsmatrix ein thermoplastisches Hochleistungspolymer, wie z. B. PAEK, PEKK, PEEK, PPS, PAI, PES, PEI oder LCP, oder deren Copolymere oder eine Kombination dieser thermoplastischen Hochleistungspolymere und/oder deren Copolymere umfasst.

## Claims

1. A hot press (1) for producing a flat part (41), the flat part preferably being made of a composite material and preferably comprising at least one layer of fibrous reinforcement and a matrix for strengthening this fibrous reinforcement, the hot press (1) comprising:
- two members (5, 7), each member comprising a plate (11, 13), the plates both having a pressing surface (23, 25), which face each other, are substantially parallel and each define a surface area of at least 1m², the pressing surfaces thus delimiting between them a space (29) for receiving an element (27) to be heated and pressed, each member comprising a frame (19, 21) opposite the pressing surface, the plate of each member resting against the frame of that member,
- a pressing actuator (6), configured to exert a pressing force (P) on at least one of the two members (5), via the frame (19) of that member, towards the other member (7), and
- means for heating (31, 33) at least one of the pressing surfaces to a temperature of between approximately 300 and 450°C,
**characterised in that** the hot press (1) further comprises a compensation system (44; 144), comprising at least one removable wedge (45, 46, 47; 145, 146, 147) interposed between the frame (21) and the plate (13) of at least one of the two members (7), the removable wedge thus resting against the bed of that member (7) in order to impose a deformation of the pressing surface (25) of that member (7) in the direction of the other member (5).

2. The hot press (1) according to claim 1, **characterised in that** the compensation system (44; 144) extends opposite only a part of the surface area of the pressing surface (25), being arranged in line with a geometric defect zone of the pressing surface.

3. The hot press (1) according to any of the preceding claims, **characterised in that** the compensation system (44; 144) comprises at least one central removable wedge (45; 145) and two lateral removable wedges (46, 47; 146, 147) arranged on either side of the central removable wedge edge-to-edge therewith, the value of the thickness of the central removable wedge being greater than the value of the thickness of the lateral removable wedges.

4. The hot press (1) according to any of the preceding claims, **characterised in that** each removable wedge (45, 46, 47) is formed by a single metal sheet, preferably steel.

5. The hot press (1) according to any one of the preceding claims, **characterised in that** the hot press comprises at least one layer of thermal insulation (17) interposed between the frame (21) and the plate (13) of the member (7) provided with the compensation system (44; 144), the compensation system being preferably interposed between the layer of thermal insulation and the frame of that member.

6. The hot press (1) according to any one of the preceding claims, **characterised in that** the pressing actuator (6) is designed so that the pressing force (P) exerted causes a pressure on the element to be heated and pressed, the pressure having a value of between 1 and 15 bar, the pressing actuator preferably comprising at least one hydraulic cylinder.

7. The hot press (1) according to any of the preceding claims, **characterised in that**:
- each plate (11, 13) comprises a metal core on which the pressing surface (23, 25) is formed, and
- the heating means (31,33) comprises a system of heating tubes which extends within the metal core of at least one of the trays.

8. The hot press (1) according to any of the preceding claims, **characterised in that** the frame (21) and the plate (13) of each of the members (7) constitute permanent parts of the hot press (1).

9. A pressing assembly comprising:
- a hot press (1) according to any of the preceding claims, and
- the element (27) to be heated and pressed, which comprises a flat mould, which comprises two flat impressions (35, 37) fitted against each other, thus providing between them a housing (39) for the flat part (41) to be pressed and heated, each flat impression being designed to be placed in flat abutment against one of the pressing surfaces (23, 25) of the hot press, so as to transmit the pressing force (P) and the temperature of the heating means (31, 33) to the flat part.

10. A method of adjusting a hot press (1) according to any of claims 1 to 8, **characterised in that** the method comprises the following successive steps:
- introducing a control system into the receiving space (29) of the hot press (1),
- the control system introduced into the receiving space is pressed with the aid of the hot press in order to permanently impress the geometry of the pressing surfaces (23, 25) onto the control system,
- collecting data on the geometry of the pressing surfaces by taking dimensional measurements of the control system thus impressed, while the control system has been removed from the press, and
- modifying the compensation system (44; 144) according to the collected data.

11. Use of a hot press (1) according to any one of claims 1 to 8 to produce a flat part (41) adapted to form a structural or trim part of an aircraft.

12. Use of a hot press (1) according to any one of claims 1 to 8 to produce a flat part (41) made of composite material, the composite material comprising at least one layer of fibrous reinforcement and a matrix for strengthening the fibrous reinforcement.

13. Use according to claim 12, **characterised in that** the composite material is a high-performance composite material, the fibre reinforcement of which comprises threads of inorganic material, such as carbon and/or glass, and is continuous, and the strengthening matrix of which comprises a high-performance thermoplastic polymer, such as PAEK, PEK, PEEK, PPS, PAI, PES, PEI, or LCP, or their copolymers, or a combination of these high-performance thermoplastic polymers and/or their copolymers.
